# EUROPÄISCHE PATENTSCHRIFT

(11) **EP 0 780 278 B1**
(45) Veröffentlichungstag und Bekanntmachung des Hinweises auf die Patenterteilung: **07.03.2001**
(21) Anmeldenummer: 96120226.4
(22) Anmeldetag: 17.12.1996
(51) Int. Cl.: B60T 17/00, F16D 65/16

(54) **Hydraulische Bremsanlage für ein Kraftfahrzeug**
Hydraulic brake installation for a motor vehicle
Installation de freinage hydraulique pour un véhicule à moteur

(30) Priorität: 20.12.1995 DE 19547753
(43) Veröffentlichungstag der Anmeldung: 25.06.1997
(73) Patentinhaber: Bayerische Motoren Werke Aktiengesellschaft, 80788 München (DE)
(72) Erfinder: Flechtner, Horst, 85748 Garching (DE); Drews, Reinhard, Dr., 85238 Petershausen (DE); Schwärzell, Karl, 85764 Oberschleissheim (DE); Feldmann, Peter, 85622 Weissenfeld (DE); Reimer, Stefan, 84048 Puttenhausen (DE); Schölzel Dr, Matthias, 81667 München (DE); Imre, Nagy, 85386 Eching (DE); Linde, Hansjürgen, Prof.-Dr., 96450 Coburg (DE)

(56) Entgegenhaltungen:
- EP-A- 0 205 870
- DE-A- 2 332 394
- DE-A- 4 420 067
- DE-C- 3 940 817
- DE-U- 8 913 143
- PATENT ABSTRACTS OF JAPAN vol. 005, no. 143 (M-087), 9.September 1981 & JP 56 075257 A (TOYOTA MOTOR CORP), 22.Juni 1981,
- PATENT ABSTRACTS OF JAPAN vol. 013, no. 543 (P-970), 6.Dezember 1989 & JP 01 224648 A (ECHIREN CHEM KK), 7.September 1989,

## Beschreibung

Die Erfindung bezieht sich auf eine hydraulische Bremsanlage für ein Kraftfahrzeug nach dem Oberbegriff des Anspruchs 1.

Aus der JP 56-75257 A ist eine gattungsgemäße Bremsanlage bekannt. In den Vorratsbehälter des Hauptbremszylinders ist hierbei ein mit Molekularsieb-Granulat befülltes Netz eingesetzt. Das Molekularsieb wird von einem Aluminosilikat-Zeolith mit einem Porendurchmesser von ca. 0,4 bis 0,5 nm gebildet. Das Zeolith ist in der Lage, aus der hygroskopischen Bremsflüssigkeit das aus der Luft aufgenommene Wasser zu adsorbieren.

Durch den Einsatz des Zeolithes im Vorratsbehälter des Hauptbremszylinders wird zwar eine gewisse "Trocknung" der dort befindlichen Bremsflüssigkeit erreicht. Entscheidend für die Verhinderung der Bildung von Dampfblasen im Bereich der Bremskolben der Radbremse ist jedoch, daß der Wassergehalt der Bremsflüssigkeit auch an dieser Stelle möglichst niedrig ist. Versuche der Anmelderin haben ergeben, daß zwischen dem Hauptbremszylinder einerseits und dem Bereich in Radbremsennähe andererseits ein Konzentrationsausgleich durch Diffusion nicht erfolgt. Da die einzelnen Bremsleitungen zu den Radbremsen "Sackgassen" darstellen, reichen die durch die Bremsenbetätigung entstehenden Bewegungen der Bremsflüssigkeitssäule in der Bremsleitung nicht aus, einen Konzentrationsausgleich mit dem Vorratsbehälter herzustellen.

Aufgabe der Erfindung ist es daher, die bekannte Bremsanlage mit einfachen Mitteln weiterzubilden, um die Bremsflüssigkeit auch im Radbremsenbereich wirksam zu "entfeuchten". Damit sollen die Wechselintervalle für die Bremsflüssigkeit verlängert werden.

Zu diesem Zweck hat die Anmelderin in der Patentanmeldung DE-A-4 420 067 bereits vorgeschlagen, daß die Bremsflüssigkeit in der Bremsanlage umgewälzt wird, um eine Durchmischung zu erreichen.

Erfindungsgemäß wird nun gemäß Anspruch 1 vorgeschlagen, die "Entfeuchtungseinrichtung" in einer Entfehrnung von weniger als 0,5 m Bremsleitung zu den Bremskolben der Radbremsen anzubringen. Durch die Bremsenbetätigung wird eine Bewegung der Bremsflüssigkeitssäule erzeugt, die in Radbremsennähe eine ausreichende Durchmischung der Bremsflüssigkeit erzeugt. Durch Versuche wurde nachgewiesen, daß diese Durchmischung in Verbindung mit der Anordnung der Entfeuchtungseinrichtung in Radbremsennähe (bis zu einer Entfernung von ca. 0,5 m von den Bremskolben) eine wirkungsvolle Entfeuchtung der Bremsflüssigkeit gewährleistet. Des weiteren wurde festgestellt, daß das in eine hydraulische Bremsanlage eingesetzte Molekularsieb nach erfolgter Adsorption von Wassermolekülen diese auch bei Temperaturen bis ca. 120 °C über einen Zeitraum von mehreren Stunden nicht in nennenswertem Umfang wieder an die Bremsflüssigkeit abgibt . Bei Temperaturen bis ca. 120 °C beträgt das Wasseraufnahmevermögen von Molekularsieb ca. 15 Massenprozent und ist damit nur unwesentlich geringer als bei Raumtemperatur. Durch Versuche wurde außerdem eine ausreichende Druck- und Temperaturfestigkeit von Molekularsieb nachgewiesen.

Durch die erfindungsgemäße Entfeuchtung werden für die Bremsflüssigkeit deutlich längere Standzeiten erreicht. Der routinemäßige Austausch der Bremsflüssigkeit im Rahmen der Kfz-Wartung beruht in erster Linie auf dem über der Einsatzzeit steigenden Wassergehalt der Bremsflüssigkeit, der den Siedepunkt der Bremsflüssigkeit zunehmend herabsetzt. Durch die verlängerten Wechselintervalle werden die Wartungskosten für den Fahrzeugnutzer reduziert. Außerdem verringert sich die Menge an zu entsorgender Bremsflüssigkeit. Bei einer wirksamen Entfeuchtung der Bremsflüssigkeit kann zudem auf Bremsflüssigkeiten mit einfacherer chemischer Zusammensetzung ausgewichen werden, die kostengünstiger und weniger umweltbelastend sind als die heute verwendeten Bremsflüssigkeiten. Auch wird bei älteren Fahrzeugen, die erfahrungsgemäß in geringerem Maße einer regelmäßiger Wartung unterliegen, eine höhere Sicherheit erreicht, da durch die Entfeuchtung der Bremsflüssigkeit in jedem Fall die Bildung von Dampfblasen bei extremer Beanspruchung der Bremse hinausgezögert wird. Molekularsieb ist darüber hinaus kostengünstig in der Herstellung, unter Umweltgesichtspunkten unbedenklich und ohne Einschränkung recyclingfähig, da es bei Erhitzen auf Temperaturen bis ca. 300 °C das aufgenommene Wasser wieder abgibt.

Gemäß Anspruch 2 wird vorgeschlagen, die Entfeuchtungseinrichtung an der sowieso vorhandenen Trennstelle zwischen der starren Bremsleitung des Fahrzeugaufbaus und dem flexiblen Bremsschlauch des beweglichen Rades anzubringen. Hier liegen die Temperaturen mit maximal ca. 120 °C deutlich niedriger als am Bremssattel, der grundsätzlich auch als Anbringungsort in Frage kommt, mit Nachteilen hinsichtlich des zur Verfügung stehenden Freiraums. Außerdem treten am Bremssattel Maximaltemperaturen von ca. 200 °C auf. Bei einer Anbringung gemäß Anspruch 2 hingegen ist aufgrund der niedrigeren Temperaturen das Wasseraufnahmevermögen des Molekularsiebs wesentlich höher. Damit kann das Molekularsieb deutlich kleiner dimensioniert werden und beansprucht somit weniger Bauraum. Außerdem ergibt sich im Unterschied zur Anbringung am Bremssattel keine Erhöhung der ungefederten Massen. Auch werden gegenüber einer Anbringung am Bremssattel geringere Anforderungen an die Vibrationsbeständigkeit des Molekularsiebs gestellt.

Gemäß Anspruch 3 ist die Entfeuchtungseinrichtung als geschlossenes Gehäuse ausgebildet. Im Inneren des Gehäuses ist ein der Form des Gehäuses angepaßter Preßkörper aus Molekularsieb vorgesehen. Durch diese Ausbildung wird eine leichte Austauschbarkeit der gesättigten Patrone ermöglicht. Das Gehäuse ist aufgrund des erfindungsgemäßen Anbringungsortes gut zugänglich und kann zum Wechsel der Patrone leicht geöffnet werden.

Wird das Gehäuse mit je einem Anschluß für eine zu- und eine abführende Bremsflüssigkeitsleitung versehen und gemäß Anspruch 2 am Übergang zwischen Bremsleitung und Bremsschlauch angeordnet, so wirkt es quasi als Kupplung zwischen Bremsleitung und Bremsschlauch und liegt direkt im Bremsflüssigkeitsstrom. Alternativ ist ebenso eine Anordnung des Gehäuses am "toten" Ende eines T-förmigen Anschlußstückes zwischen Bremsschlauch und Bremsleitung möglich, da auch bei dieser Konfiguration eine ausreichende Entfeuchtungswirkung erzielt wird.

Durch die spielfreie Fixierung der Patrone im Gehäuse über ein oder mehrere Federelemente (Anspruch 4) wird vermieden, daß das Molekularsieb an der Innenseite des Gehäuses anschlägt oder scheuert. Hierdurch wird die Entstehung von Abriebpartikeln aus dem Molekularsieb weitestgehend unterbunden. Die von den Federelementen ausgeübte Vorspannung ist so zu bemessen, daß unter allen Betriebsbedingungen an der Patrone keine unzulässig hohen inneren Spannungen auftreten.

Gemäß Anspruch 5 kann das Granulat bzw. die Preßpatrone in einen geschlossenen "Filterbeutel" eingesetzt werden, um den Übertritt feinster Abriebpartikel in die Bremsflüssigkeit auszuschließen.

Anstelle einer Patrone kann die wasseraufnehmende Substanz auch von einer Mehrzahl kleinerer Pillen gebildet werden (Anspruch 6), mit Vorteilen bei der Herstellung der Pillen gegenüber den großvolumigeren Patronen.

Gemäß der JP-A wird ein Molekularsieb mit einem Porendurchmesser von ca. 0,4 bis 0,5 nm vorgeschlagen. Bei der Lagerung eines derartigen Molekularsiebs an der Umgebungsluft (z. B. vor der Montage ins Fahrzeug) wird jedoch Sauerstoff und Stickstoff aus der Luft aufgenommen und anschließend in die Bremsflüssigkeit abgegeben, insbesondere bei einer Erstbefüllung der Bremsanlage nach dem Vakuumbefüll-Verfahren. Wird hingegen erfindungsgemäß der Porendurchmesser auf ca. 0,3 nm verringert (Anspruch 7), so ergibt sich hierdurch eine deutlich geringere Gasaufnahme aus der Luft. Die Wasseraufnahme sinkt jedoch dabei nur geringfügig, da sich die Wassermoleküle aufgrund ihrer Polarität und Größe nach wie vor in die Hohlräume des Kristallgitters einlagern können.

Anspruch 8 löst ein weiteres Problem in diesem Zusammenhang, nämlich die Aufnahme der in der Umgebungsluft enthaltenen Feuchtigkeit durch das Molekularsieb in der Zeit vor der Montage ins Fahrzeug. Durch die Hülle wird das Molekularsieb wirkungsvoll von der feuchten Umgebungsluft getrennt. Nach dem Einbau zersetzt sich die Hülle unter der Wirkung der "aggressiven" Bremsflüssigkeit.
Eine weitere Möglichkeit besteht darin, die Patronen in einem mit Bremsflüssigkeit gefüllten Behälter anzuliefern und zu lagern.

Alternativ kann auch das Gehäuse selbst als Transportbehälter eingesetzt werden. Hierzu wird das Gehäuse beispielsweise mit einem Gas befüllt, das vom Molekularsieb nicht adsorbiert wird. Anschließend werden die Anschlüsse des Gehäuses mit einer Folie versiegelt, die bei der Montage durchstoßen wird. Damit ist eine Vakuumbefüllung der Bremsanlage ungehindert möglich.

Durch die Beimengung beispielsweise von Edelmetall- oder Schwermetallionen zumindest an einem Teilbereich der Oberfläche der Patrone (Anspruch 9) ergibt sich eine Verfärbung, die den Sättigungsgrad des Molekularsiebs mit Wassermolekülen anzeigt. Somit werden unwirksame Patronen bei der Montage von vornherein erkannt.

Mögliche Ausführungsbeispiele der Erfindung sind nachfolgend in der Zeichnung näher dargestellt und beschrieben. Es zeigt:
- Fig. 1: in schematisierter Schnittdarstellung eine erste erfindungsgemäße Entfeuchtungseinrichtung und
- Fig. 2: eine zweite Ausführungsform der Erfindung.

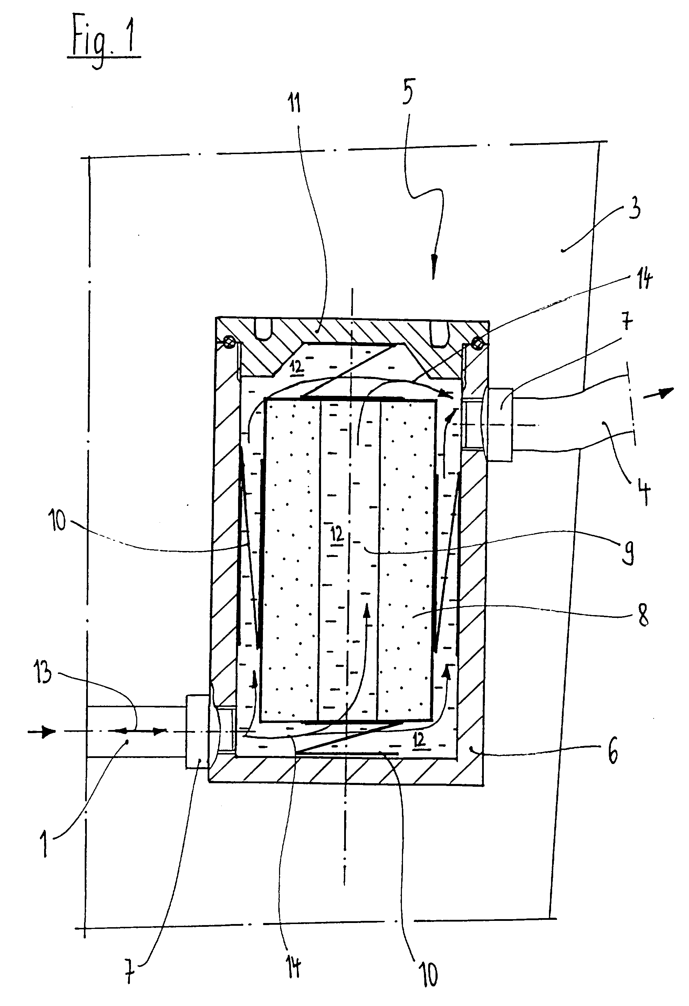

Die Fig. 1 zeigt einen Ausschnitt aus einer hydraulischen Bremsanlage eines Kraftfahrzeuges. Eine starre Bremsleitung 1 ist am Radhaus 3, das einen Teil des Fahrzeugaufbaus bildet, angeordnet. Wegen der Federungs- und Lenkbewegungen der Räder erfolgt die Verbindung der nicht dargestellten Radbremse mit der starren Bremsleitung 1 über einen flexiblen Bremsschlauch 4. Zwischen Bremsleitung 1 und Bremsschlauch 4 ist erfindungsgemäß eine in ihrer Gesamtheit mit 5 bezeichnete Entfeuchtungseinrichtung vorgesehen. Die Entfeuchtungseinrichtung 5 besteht aus einem etwa zylindrischen Gehäuse 6 mit Anschlußstutzen 7 für Bremsleitung 1 und Bremsschlauch 4. Das Gehäuse 6 ist am Radhaus 3 befestigt. In das Innere des Gehäuses 6 ist eine Entfeuchtungspatrone 8 eingesetzt. Die Patrone 8 ist als Preßkörper aus Molekularsieb ausgebildet. Sie hat eine zylindrische Form mit einer mittigen Durchgangsöffnung 9. Alternativ können zur Vergrößerung der Kontaktoberfläche auch mehrere Öffnungen vorgesehen sein. Federelemente 10 gewährleisten eine gleichbleibende Lage der Patrone 8 im Gehäuse 6. Die Federelemente 10 sind in der Figur nur symbolisch dargestellt und können beispielsweise als ringförmige Schaumstoffkappen ausgebildet sein, die ober- und unterseitig auf die zylindrische Patrone aufgesteckt werden. Über einen Gehäusedeckel 11 kann die Patrone 8 ausgetauscht werden. Alternativ kann das Gehäuse 6 auch nur einen Anschluß aufweisen, mit dem es an das freie Ende eines T-förmigen Verbindungsstückes zwischen Bremsleitung 1 und Bremsschlauch 4 angebunden ist.

Das Innere des Gehäuses 6 ist mit Bremsflüssigkeit 12 gefüllt. Durch die Bremsenbetätigung entsteht eine Bewegung der Flüssigkeitssäule in der Bremsleitung 1 und im Bremsschlauch 4, die durch Pfeile 13 dargestellt ist. Aufgrund dieser Verschiebungen der Bremsflüssigkeit ergibt sich auch eine Durchströmung des Inneren des Gehäuses 6, was durch die Pfeile 14 symbolisiert ist. Hierbei wird die Patrone 8 sowohl außenseitig als auch mittig von der Bremsflüssigkeit 12 durchströmt.

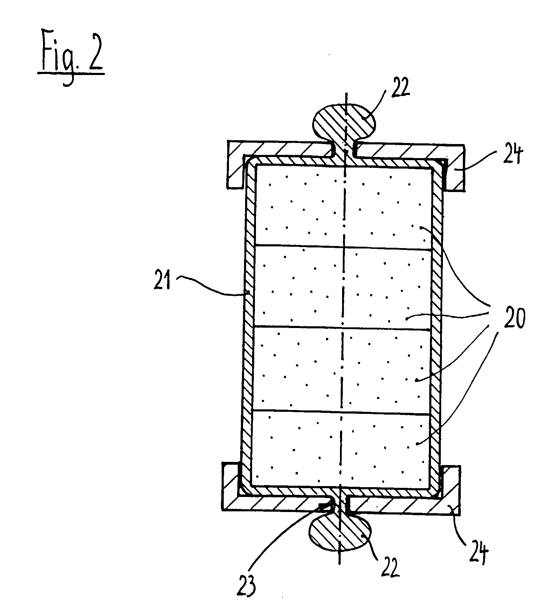

Fig. 2 zeigt eine weitere Ausführungsform einer erfindungsgemäßen Entfeuchtungseinrichtung, bei der die wasseraufnehmende Substanz von vier einzelnen Pillen 20 aus Molekularsieb gebildet wird, die in eine elastische, feinporige Hülle 21 eingesetzt sind. Die Hülle 21 ist schlauchartig geformt und an ihren beiden Enden beispielsweise durch jeweils einen Knoten 22 verschlossen. Die beiden Knoten 22 sind in Schlitze 23 zweier Halterungen 24 eingeführt. Die Einheit aus Pillen 20, Hülle 21 und Halterungen 24 wird in ein Gehäuse 6 gemäß Fig. 1 eingesetzt und beispielsweise über Tellerfedern im Gehäuse 6 fixiert.

Durch die elastische Hülle 21 werden die einzelnen zylindrischen Pillen 20 unter Vorspannung aneinandergepreßt. Gleichzeitig verhindert die Hülle einen Übertritt von freien Abriebpartikeln des Molekularsiebs in die Bremsflüssigkeit. Selbstverständlich können die Pillen 20 auch mit einer mittigen Durchgangsöffnung versehen sein. Die Herstellung der Pillen 20 (bzw. der Patrone 8) erfolgt beispielsweise durch ein Extruderverfahren oder durch Pressen in einer geschlossenen Form.

Durch die beschriebenen Anordnungen kann der bremskolbennahen Bremsflüssigkeit 12 wirkungsvoll die aus der Umgebung aufgenommene Feuchtigkeit entzogen werden. Hierdurch können die Wechselintervalle für die Bremsflüssigkeit verlängert werden. Außerdem wird der Wassergehalt in der Bremsflüssigkeit 12 möglichst niedrig gehalten, so daß sich eine hohe Betriebssicherheit der Bremsanlage auch bei extremen Beanspruchungen einstellt.

Die Patrone 8 bzw. die Pillen 20 bestehen aus Molekularsieb mit einem Porendurchmesser von ca. 0,3 nm. Mit steigendem Porendurchmesser wird zwar die Aufnahmekapazität für Wasser erhöht, gleichzeitig lagern sich jedoch auch Gasmoleküle aus der Umgebungsluft sowie bei größeren Porendurchmessern auch andere Bestandteile der Bremsflüssigkeit (z. B. Antikorrosiva) ein. Die maximale Aufnahmekapazität bei den an der Übergangsstelle von der Bremsleitung 1 zum Bremsschlauch 4 auftretenden Temperaturen von ca. 120 °C liegt bei etwa 16 Massenprozent. Damit kann bei einer angenommenen Menge von ca. 100 ml zu trocknender Bremsflüssigkeit und einer zu entfernenden Wassermenge von ca. 3 ml innerhalb einer Standzeit von zwei Jahren bei einer Wasseraufnahmekapazität von 15 % mit ca. 20 g Molekularsieb grundsätzlich eine ausreichende Entfeuchtung sichergestellt werden. Bei der Dimensionierung der Patrone 8 bzw. der Pillen 20 ist zu berücksichtigen, daß mit zunehmendem Verschluß der Reibbeläge ein größeres Bremsflüssigkeitsvolumen im Bereich des Bremskolbens vorliegt. Außerdem ist aus Sicherheitsgründen eine gewisse Überdimensionierung angeraten.

Als Molekularsieb kann beispielsweise das Material Baylith TE-G 273 der Fa. Bayer AG oder das Material Köstrolith 3 AS-1.6 der Fa. CWK, Bad Köstritz, eingesetzt werden. Bei beiden Materialien handelt es sich um Zeolithe der Kristallstruktur A, die für den Einsatz im Bremskreislauf eines Kraftfahrzeuges ausreichend temperatur- und druckfest sind. Langzeitversuche haben ergeben, daß durch die Anwesenheit des Zeolithes sich die Zusammensetzung der Bremsflüssigkeit nicht verändert. Auch wird nach erfolgter Sättigung des Molekularsiebs die Tendenz der Bremsflüssigkeit zur Wasseraufnahme nicht nennenswert verstärkt. Die Molekularsieb-Patronen können durch einfaches Erhitzen an Luft das aufgenommene Wasser wieder abgeben. Eine derartige Regeneration ist jedoch wirtschaftlich nicht sinnvoll, da die Materialkosten für Molekularsieb sehr niedrig liegen. Auch unter Umweltschutzaspekten ist ein Recycling von Molekularsieb nicht erforderlich, da es sich um eine unbedenkliche mineralische Substanz handelt. Molekularsieb ist außerdem gegen die verwendeten Bremsflüssigkeiten auf Glykolesterbasis (DOT4) und Silikonbasis (DOT5) stabil.

## Patentansprüche

1. Hydraulische Bremsanlage für ein Krafflahrzeug, mit einem Bremsflüssigkeitskreislauf mit einer Einrichtung, die der Bremsflüssigkeit Wasser entzieht,
dadurch gekennzeichnet, dass die Einrichtung (5) in einer Entfernung von weniger als 0,5 m Bremsleitung zu den Bremskolben der Radbremse angeordnet ist.

2. Hydraulische Bremsanlage nach Anspruch 1,
dadurch gekennzeichnet, daß die Einrichtung (5) am Übergang zwischen der fahrzeugaufbauseitigen Bremsleitung (1) und dem radseitigen Bremsschlauch (4) angeordnet ist.

3. Hydraulische Bremsanlage nach Anspruch 1 und/oder 2,
dadurch gekennzeichnet, daß die Einrichtung (5) ein geschlossenes Gehäuse (6) mit wenigstens einem Anschluß (7) für die Zuführung von Bremsflüssigkeit (12) aufweist, wobei das Gehäuse (6) in seinem Inneren eine Patrone (8) aufnimmt, die zumindest teilweise aus einer wasseraufnehmenden Substanz besteht.

4. Hydraulische Bremsanlage nach Anspruch 3,
dadurch gekennzeichnet, daß sich die Patrone (8) über wenigstens ein Federelement (10) mittelbar am Gehäuse (6) abstützt.

5. Hydraulische Bremsanlage nach einem der vorgenannten Ansprüche,
dadurch gekennzeichnet, daß die wasseraufnehmende Substanz (Patrone 8) in eine feinporige Hülle eingesetzt ist.

6. Hydraulische Bremsanlage nach Anspruch 5,
dadurch gekennzeichnet, daß die wasseraufnehmende Substanz aus wenigstens zwei einzelnen Pillen (20) besteht, die von einer elastischen Hülle (21) zusammengehalten werden.

7. Hydraulische Bremsanlage nach einem der vorgenannten Ansprüche,
dadurch gekennzeichnet, daß die wasseraufnehmende Substanz von Molekularsieb aus Aluminosilikat mit einem Porendurchmesser von ca. 0,3 nm gebildet wird.

8. Hydraulische Bremsanlage nach einem der vorgenannten Ansprüche,
dadurch gekennzeichnet, daß die Patrone (8) im Anlieferzustand in eine luftdichte Hülle eingesetzt ist, die sich unter der Einwirkung von Bremsflüssigkeit (12) zersetzt.

9. Hydraulische Bremsanlage nach einem der vorgenannten Ansprüche,
dadurch gekennzeichnet, daß die Patrone (8) mit einem Stoff versehen ist, der durch Farbänderung den Wassergehalt der Patrone (8) anzeigt.

## Claims

1. An hydraulic braking installation for a motor vehicle, with a brake fluid circuit with a device, which draws water out of the brake fluid, characterised in that the device (5) is arranged at a distance of less than 0.5m of brake line to the brake cylinder of the wheel brake.

2. An hydraulic braking installation according to Claim 1,
characterised in that the device (5) is arranged at the transition between the vehicle body side brake line (1) and the wheel side brake.

3. An hydraulic braking installation according to Claim 1 or Claim 2,
characterised in that the device (5) has an enclosed casing (6) with at least one connector (7) for the supply of brake fluid (12), whereby the casing (6) accepts a cartridge (8) inside it, which at least partly comprises a water absorbing substance.

4. An hydraulic braking installation according to Claim 3,
characterised in that the cartridge (8) is supported indirectly in the casing (6) by at least one spring element (10).

5. An hydraulic braking installation according to any preceding claim,
characterised in that the water absorbing substance (cartridge 8) is enclosed in a fine-pored envelope.

6. An hydraulic braking installation according to Claim 5,
characterised in that the water absorbing substance comprises at least two individual pills (20), which are held together by an elastic sleeve (21).

7. An hydraulic braking installation according to any preceding claim,
characterised in that the water absorbing substance is formed from molecular sieve material of aluminium silicate with a pore diameter of about 0.3nm.

8. An hydraulic braking installation according to any preceding claim,
characterised in that the cartridge (8) is enclosed in an airtight envelope in the delivery condition, which disintegrates under the effect of brake fluid (12).

9. An hydraulic braking installation according to any preceding claim,
characterised in that the cartridge (8) is provided with a material, which indicates the water content of the cartridge (8) by a change of colour.

## Revendications

1. Installation de freinage hydraulique pour véhicule automobile comprenant un circuit de liquide de frein et un dispositif qui extrait de l'eau du liquide de frein,
caractérisée en ce que
le dispositif (5) est installé à une distance inférieure à 0,5 m dans la conduite de frein par rapport aux pistons des freins de roue.

2. Installation selon la revendication 1,
caractérisée en ce que
le dispositif (5) est prévu au passage entre la conduite de frein (1) du côté du châssis du véhicule et le flexible de frein (4) du côté de la roue.

3. Installation selon l'une des revendications 1 et/ou 2,
caractérisée en ce que
• le dispositif (5) comporte un boîtier fermé (6) avec au moins un branchement (7) pour l'alimentation en liquide de frein (12),
• le boîtier (6) recevant intérieurement une cartouche (8) qui est au moins en partie formée d'une matière absorbant l'eau.

4. Installation selon la revendication 3,
caractérisée en ce que
la cartouche (8) s'appuie indirectement sur le boîtier (6) par au moins un élément à ressort (10).

5. Installation selon l'une quelconque des revendications précédentes,
caractérisée en ce que
la substance absorbant l'eau (cartouche 8) est placée dans une enveloppe à pores fins.

6. Installation selon la revendication 5,
caractérisée en ce que
la substance absorbant l'eau est formée d'au moins deux pastilles distinctes (20) réunies par une enveloppe élastique (21).

7. Installation selon l'une quelconque des revendications précédentes,
caractérisée en ce que
la substance absorbant l'eau est formée par un tamis moléculaire de silicate d'aluminium ayant un diamètre de pores de l'ordre de 0,3 nm.

8. Installation selon l'une quelconque des revendications précédentes,
caractérisée en ce que
la cartouche (8) est placée pour être fournie dans une enveloppe étanche à l'air et qui se détruit sous l'action du liquide de frein (12).

9. Installation selon l'une quelconque des revendications précédentes,
caractérisée en ce que
la cartouche (8) comporte une matière indiquant la teneur en eau de la cartouche (8) par changement de couleur.
